Europäisches Patentamt

**European Patent Office**

Office européen des brevets

(11) Numéro de publication: **0 190 527**
**A1**

# (12) DEMANDE DE BREVET EUROPEEN

(21) Numéro de dépôt: 85402554.1

(22) Date de dépôt: 19.12.85

(51) Int. Cl.⁴: **H 01 R 23/68**
**G 06 K 7/06**

(30) Priorité: 09.01.85 FR 8500226

(43) Date de publication de la demande:
**13.08.86** Bulletin 86/33

(84) Etats contractants désignés:
**DE GB IT SE**

(71) Demandeur: ELECTRONIQUE CKD
Z.I. Les Béthumes 5, rue du Limousin
F-95310 Saint Ouen L'Aumone(FR)

(72) Inventeur: Picciotto, Robert
77 bis, rue Michel-Ange
F-75016 Paris(FR)

(72) Inventeur: Ramel, François
57 bis, rue Rivay
F-92300 Levallois(FR)

(72) Inventeur: Rousseau, Alain
7, rue Nicolas Houel
F-75005 Paris(FR)

(72) Inventeur: Touzin, Philippe
33, Avenue de la Motte Piquet
F-75007 Paris(FR)

(74) Mandataire: Marquer, Francis et al,
35, Avenue Victor Hugo
F-78960 Voisins le Bretonneux(FR)

(54) Connecteur pour objets portatifs incluant un circuit électrique ou électronique, tels qu'une carte électronique.

(57) Le connecteur selon l'invention comprend une structure fixe (1) munie de moyens de guidage (1b) dans lesquels les objets portatifs (2) peuvent être engagés et coulisser, et un dispositif de connexion comportant : une partie déformable élastiquement (3) montée sur une portion de la structure fixe (1) comprenant des éléments conducteurs fixes, une partie (4) mobile en translation, reliée à la partie déformable (3) et pourvue d'éléments de contacts (4a), un dispositif de butée solidaire de la partie déformable (3) sur lequel vient porter l'objet (2) lors de son coulissement, des éléments conducteurs solidaires de la partie mobile (4) et de la partie déformable (3) reliant lesdits éléments de contacts (4a) auxdits éléments conducteurs, et un contact de validation.

Ce connecteur s'applique notamment aux cartes électroniques et, en particulier, aux cartes électroniques de crédit.

## FIG. 1

- 1 -

## CONNECTEUR POUR OBJETS PORTATIFS INCLUANT UN CIRCUIT ELECTRIQUE OU ELECTRONIQUE, TELS QU'UNE CARTE ELECTRONIQUE.

La présente invention concerne un connecteur pour objet portatif incluant un circuit électrique ou électronique tel qu'une carte électronique amovible par exemple, mais non exclusivement, du type de la carte électronique de crédit décrite dans le brevet FR 2 337 381.

D'une manière générale, on sait qu'il a déjà été proposé de nombreuses solutions permettant la connexion entre de telles cartes électroniques et un système électronique fixe de traitement. Ces solutions font habituellement appel, soit à des dispositifs à mâchoire et à chariot à balancier, soit à des dispositifs à contacts glissants.

Les dispositifs à mâchoire et à chariot à balancier présentent l'inconvénient de faire intervenir un montage encombrant de pièces mécaniques délicates, car en mouvement et donc relativement onéreuses. Ces dispositifs, dont un exemple de réalisation se trouve décrit dans le brevet FR 2 445 560, se prêtent donc mal à une intégration dans des appareils destinés au grand public dont certains doivent être portatifs.

Par ailleurs, il existe à l'heure actuelle un préjugé tendant à proscrire l'utilisation de connecteurs à contacts glissants dans ce type d'application. Ainsi, par exemple, le brevet FR 2 445 560 rejette catégoriquement cette solution pour les raisons suivantes :

- les lames de contact ont à balayer une surface de l'objet amovible (carte) autre que les bornes de sortie, ce qui aurait tendance à augmenter le vieillissement des contacts ;

- les lames de contact, compte-tenu de la structure des zones de contact des cartes, passeraient successivement sur des bornes de sortie ne leur correspondant pas (disposition en colonne dans la direction de manœuvre de la carte), ce qui conduirait à des mesures contraignantes de sécurité pour éviter des liaisons électriques indésirables.

Ces remarques qui se trouvent justifiées si l'on se base sur la structure de certains connecteurs à contacts glissants utilisés couramment dans d'autres applications, ne prennent pas en compte les différents aspects technologiques ergonomiques et économiques du problème.

L'invention a donc plus particulièrement pour but la réalisation d'un connecteur du type susdit qui présente une structure spécialement conçue de manière à pouvoir tirer parti des avantages des connecteurs à contacts glissants, en évitant les inconvénients précédemment mentionnés, de manière à pouvoir obtenir notamment :

- une réduction de l'encombrement global du connecteur ;
- une simplification de la structure du connecteur et une réduction importante de son prix de revient ;
- une grande aptitude à une fabrication industrielle et à des cadences de production élevées ;
- un fonctionnement sécuritaire de la connexion ;

- 3 -

0190527

- une robustesse satisfaisante.

Pour parvenir à ces résultats, l'invention doit donc surmonter les susdits préjugés et résoudre les problèmes spécifiques à la connexion des cartes électroniques amovibles et portatives.

Il convient de noter tout d'abord à ce sujet que, telles qu'actuellement réalisées, ces cartes sont conçues de telle sorte que les plots de contact sont répartis selon deux colonnes axées parallèlement à l'un des bords de la carte, la première colonne étant située à environ 10 mm de ce bord. Ces cartes qui présentent habituellement une piste magnétique, ont donc un sens de déplacement obligé qui est dans le plan de la carte et perpendiculaire au susdit bord.

Par conséquent, si l'on veut éviter que les contacts viennent toucher d'autres zones de la carte que les plots de contact qui leur correspondent, il est nécessaire de prévoir une mécanique cinématique qui transforme le mouvement de la carte dans la direction de lecture magnétique en un autre mouvement perpendiculaire à cette direction qui vienne appliquer les contacts sur la carte. A priori, cette mécanique est nécessairement encombrante et onéreuse.

D'autre part, même avec un système à mâchoires, qui assure que les contacts ne viennent toucher que les plots qui leur correspondent sur la carte, il faut un système de détection de la position de la carte et une certaine latitude sur le positionnement de la carte pour :

- déclencher le dialogue de la carte avec le terminal ;

- permettre un déplacement malencontreux de la carte en cours d'échange sans interrompre l'échange.

C'est la raison pour laquelle un tel système à mâchoires doit évoluer vers un système à chariot qui accompagne la carte sur une distance de plusieurs millimètres, ce qui en

accroît encore la complexité et ce, d'autant plus que la nécessité de la liaison électrique impose l'utilisation d'un câble souple entre le chariot et le terminal.

L'invention apporte une solution simple à tous ces problèmes.

Elle se base tout d'abord sur le fait que des contacts glissants n'imposent pas forcément une usure excessive ni des contacts, ni de la carte. En effet, pour qu'un bon contact électrique se fasse, une force d'appui de l'ordre de 10 g est suffisante, même pour des intensités très élevées (cf technologie des relais). Cela signifie que pour huit contacts à réaliser, l'effort total normal à la carte est de 80 g. Or, le coefficient de frottement d'un contact cuivre-cuivre (doré) sec, ou cuivre doré sur plastique, est de l'ordre de 0,3 à 0,4. Donc, l'effort à exercer par l'utilisateur pour introduire la carte est de l'ordre de 30 g, ce qui est minime au plan ergonomique. De même, au plan mécanique, l'effort de frottement, compte tenu de sa faible valeur, ne peut détériorer ni les contacts ni la carte. L'expérience confirme d'ailleurs ce fait puisqu'une carte a pu subir 100 000 manœuvres sans dégradation préjudiciable à son fonctionnement.

En outre, elle montre qu'au moyen d'une structure simple, il est possible de réaliser un connecteur à contacts glissants permettant d'obtenir un bon positionnement des contacts sur les plots qui leur correspondent, même dans le cas où la carte est sujette à un déplacement appréciable (par exemple plusieurs mm), ainsi qu'une détection de la position de la carte simple et fiable.

Il convient de noter par ailleurs que l'invention ne se limite pas à la connexion des cartes électroniques.

En effet, elle s'applique d'une façon plus générale à des objets portatifs incluant un circuit électrique ou électronique et qui présentent au moins une face de contact munie d'un plot de contact, au moins un élément de guidage et au moins un élément de butée situé à une distance prédéterminée dudit plot.

Le connecteur selon l'invention comprend alors une structure fixe comportant au moins un conducteur fixe destiné à être électriquement raccordé audit plot, ainsi que des moyens de guidage dans lesquels lesdits éléments de guidage de l'objet peuvent être engagés et coulissent selon un axe de déplacement déterminé jusqu'à une position fin de course dans laquelle ladite face de contact se trouve dans un plan déterminé.

Ce connecteur est plus particulièrement caractérisé par un dispositif de connexion comportant :

- une partie déformable élastiquement, montée fixement par l'une de ses extrémités sur la structure fixe et agencée de manière à exercer, à distance de ladite extrémité, une force de rappel ;

- une partie mobile en translation parallèlement au susdit plan et à faible distance de celui-ci, cette partie mobile étant reliée à la partie déformable, à distance de ladite extrémité ;

- au moins un élément porte-contact muni d'un organe de contact glissant et relié à ladite partie mobile, cet élément porte-contact s'étendant légèrement en saillie par rapport audit plan ;

- un dispositif de butée solidaire de ladite partie déformable et/ou de la partie mobile, en saillie dans l'intervalle compris entre le plan de la partie mobile et ledit plan déterminé, ce dispositif de butée étant situé à une distance de l'élément de contact sensiblement égale à la distance entre l'élément de butée et ledit plot de contact de l'objet, et en un emplacement tel qu'il soit sollicité par l'élément de butée de l'objet lors de son coulissement dans les moyens de guidage ;

- au moins un élément conducteur solidaire dudit élément de contact glissant de la partie mobile et de la partie déformable élastiquement et assurant une continuité électrique entre ledit organe de contact et l'élément conducteur fixe situé dans la zone de la partie flexible tenue fixement sur la structure fixe ; et

- un contact de validation apte à détecter la présence de l'objet dans une zone des éléments de guidage située en aval dudit dispositif de butée.

Le fonctionnement de ce connecteur est alors le suivant : Au cours de l'engagement de l'objet dans les moyens de guidage, l'élément de butée de l'objet vient porter sur le dispositif de butée du dispositif de connexion et entraîne la partie mobile en provoquant la déformation élastique de la partie déformable. La face de contact de l'objet est alors positionnée par rapport à la partie mobile et, en conséquence, l'élément de contact vient porter sur le plot de contact. Au cours de ce déplacement, le déplacement relatif de l'objet par rapport à la partie mobile et, par conséquent, par rapport à l'élément de contact demeure très faible. L'élément de contact reste donc appliqué sur le plot de contact.

En fin de course de coulissement, l'objet provoque la sollicitation du contact de validation.

Selon un mode d'exécution avantageux de l'invention, ce contact de validation comprend un élément souple métallique sur lequel vient porter une plage de contact prévue sur la partie déformable élastiquement ou sur l'élément de rappel qui lui est associé.

Comme précédemment mentionné, l'invention s'applique à la connexion électrique entre une carte électronique telle qu'une carte de crédit et un système fixe de traitement.

Dans ce cas, les deux susdits éléments de guidage consistent en les bords latéraux de la carte et les moyens de guidage consistent en deux glissières dans lesquelles viennent s'engager lesdites bordures latérales. Dans ce cas, le susdit élément de butée peut simplement consister en la bordure antérieure de la carte.

Il convient de noter que ces glissières peuvent être rectilignes. Toutefois, dans le but de réduire ou d'annuler le frottement des contacts sur d'autres parties que des plots, ces glissières peuvent présenter un profil non rectiligne et comprendre une partie allant en s'évasant vers l'orifice d'introduction de la carte.

Des modes de réalisation de l'invention seront décrits ci-après, à titre d'exemples non limitatifs, avec référence aux dessins annexés dans lesquels :

La figure 1 est une perspective éclatée d'un connecteur selon un exemple d'exécution préféré de l'invention ;

La figure 2 est une coupe axiale schématique du connecteur représenté figure 1 ;

La figure 3 est une coupe schématique du connecteur permettant d'illustrer le principe de fonctionnement du connecteur ;

La figure 4 est une coupe axiale schématique d'une variante d'exécution d'un connecteur selon l'invention.

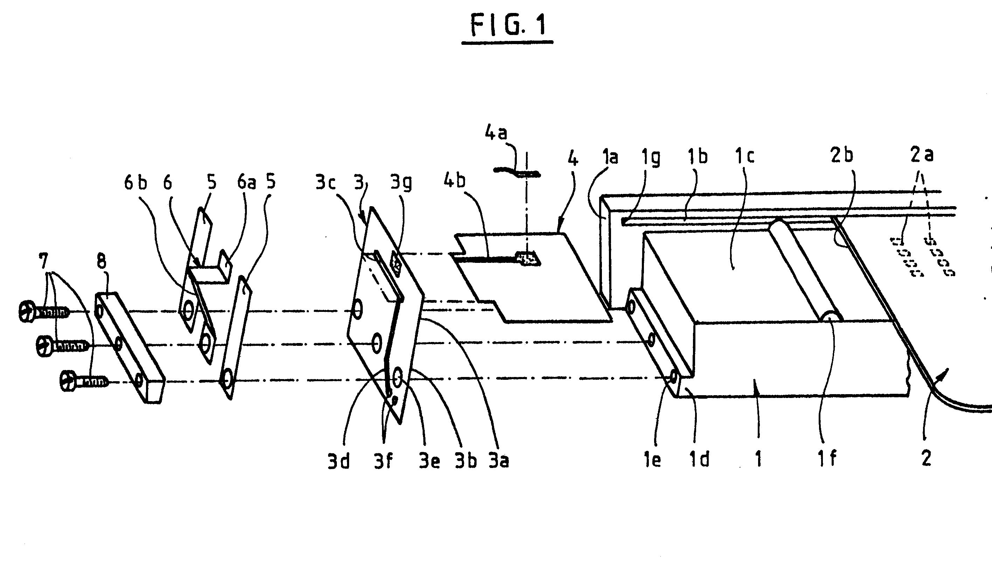

Tel que représenté sur la figure 1, le connecteur se compose tout d'abord d'une structure fixe comprenant un boîtier 1 de forme sensiblement parallélépipédique pouvant, par exemple, contenir un circuit électronique de traitement. Les deux faces latérales opposées de ce boîtier 1 sont équipées de deux joues respectives 1a (dont une seule a été représentée) munies chacune d'une glissière 1b située légèrement au-dessus de la face supérieure 1c du boîtier 1 et destinées à recevoir les deux bords latéraux opposés d'une carte électronique 2. Cette carte 2 peut donc être engagée dans les glissières 1b et coulisser avec un très faible jeu parallèlement à la face supérieure 1c du boîtier 1.

La face avant du boîtier 1 comprend, dans sa partie inférieure, une légère avancée 1d munie de perçages 1e, sur laquelle sont fixés, au moyen de vis 7 et d'une pièce d'appui 8 :

- une pièce flexible 3,

- deux éléments de rappel 5 constitués par des lames de ressort élastiques, et

- un élément de contact de validation 6 constitué par une languette repliée de manière à constituer un organe de contact 6a situé sensiblement au droit d'une plage de contact correspondante 3g de la pièce flexible 3, et faiblement distante de celle-ci, et un porte-contact flexible 6b.

La pièce flexible 3 porte, dans sa partie supérieure, une pièce porte-contacts mobile 4 venant en appui sur la face supérieure 1c du boîtier 1.

Sur cette pièce porte-contacts 4 est montée une pluralité d'éléments de contacts glissants 4a constitués par des languettes flexibles, chacun de ces éléments de contacts 4a étant destiné à venir en appui sur un plot de contact correspondant 2a de la carte 2.

A cet effet, la carte 2 est introduite par ses bords latéraux dans les glissières 1b, de sorte que son bord antérieur 2b passe successivement au-dessus d'une pièce 1f par exemple en caoutchouc puis au-dessus des éléments de contacts 4a qu'elle vient frotter plus ou moins longtemps selon la configuration de la glissière 1b, et vient enfin au contact de la pièce flexible 3 associée aux éléments de rappel 5. On notera que la pièce en caoutchouc 1f sert à nettoyer les plots de contact 2a par frottement et est destinée à immobiliser la carte 2 dans sa position finale.

A l'instant où le bord antérieur 2b de la carte vient au contact de la partie supérieure de la pièce flexible 3 (qui fait office de butée), la disposition des éléments de contact fait que les contacts 4a sont déjà correctement placés sur les plots de contact 2a qui leur correspondent. Ils resteront correctement placés jusqu'à ce que la carte 2 atteigne une butée fin de course 1g prévue sur les glissières 1b, le déplacement relatif des éléments de contacts 4a sur les plots de contact 2a demeurant toujours inférieur à la longueur des plots 2a.

Bien entendu, dans un mode de réalisation similaire, la pièce flexible 3 pourrait être directement soudée, à son extrémité inférieure, sur un circuit imprimé rigide solidaire de la structure fixe 1, portant les composants électroniques nécessaires au traitement.

Le mouvement de la carte 2 provoque la flexion de la pièce flexible 3 et de ses éléments de rappel associés 5. A un certain point de cette flexion, l'organe de contact 6a de l'élément de contact de validation 6 vient porter sur la plage de contact 3g de la pièce flexible 3 (ou éventuellement de l'un de ses éléments de rappel 5). Cette mise en contact permet d'autoriser la mise sous tension des contacts 4a. Inversement, lors du retrait de la carte 2, le frottement des contacts 4a sur la carte 2 et la force de rappel des éléments de rappel 5 contraignent la pièce flexible 3 à accompagner la carte 2 au moins jusqu'au moment où le contact de validation 6 s'écarte de la plage de contact de la pièce flexible 3 (ou de celle portée par les ressorts 5), interrompant ainsi la mise sous tension des contacts 4a avant que les éléments de contacts 4a ne glissent hors de la surface des plots 2a.

Dans l'exemple représenté, les éléments de contact 4a sont soudés sur des métallisations longitudinales 4b déposées sur un support flexible constituant la pièce porte-contacts 4. Celle-ci peut alors consister en un circuit imprimé sur verre époxy de faible épaisseur (10 ou 15/100 mm) qui glisse sur la face supérieure 1c du boîtier 1, parallèlement à la carte 2.

Ainsi, l'écrasement des éléments de contacts 4a par la carte 2 et donc l'effort que ces éléments de contacts 4a exercent sur les plots 2a sont parfaitement définis et reproductibles.

Dans cet exemple, la pièce flexible 3 peut être avantageusement réalisée par une plaquette de circuit imprimé sur verre époxy de faible épaisseur (10 ou 15/100 mm). Elle comprend, dans sa partie supérieure, une fente 3c dans laquelle vient s'engager l'extrémité antérieure de la pièce porte-contacts 4 et, dans sa partie inférieure, au niveau de l'avancée 1d du boîtier 1, une série de trous métallisés 3f dont le nombre correspond à celui des éléments de contacts et qui sont destinés à recevoir un connecteur classique non représenté pouvant être raccordé à un système électronique fixe de traitement. Cette plaquette comprend également une série de métallisations 3d reliant chacun des trous métallisés 3f à un emplacement de la fente 3c où passe une métallisation correspondante 4b de la pièce porte-contacts 4.

La liaison mécanique et électrique entre la pièce porte-contacts 4 et la pièce flexible 3 est assurée par soudure des métallisations 3d, 4b correspondantes de ces deux pièces.

Bien entendu, la pièce flexible 3 comprend, également au niveau de l'avancée 1d du boîtier 1, des trous 3e qu'utilisent les vis pour serrer, par l'intermédiaire de la pièce d'appui 8, les éléments de rappel 5 et l'élément de contact de validation 6. Ainsi, la pièce flexible 3 reste naturellement plaquée contre les éléments de rappel 5, au repos comme lors des déplacements de la carte 2.

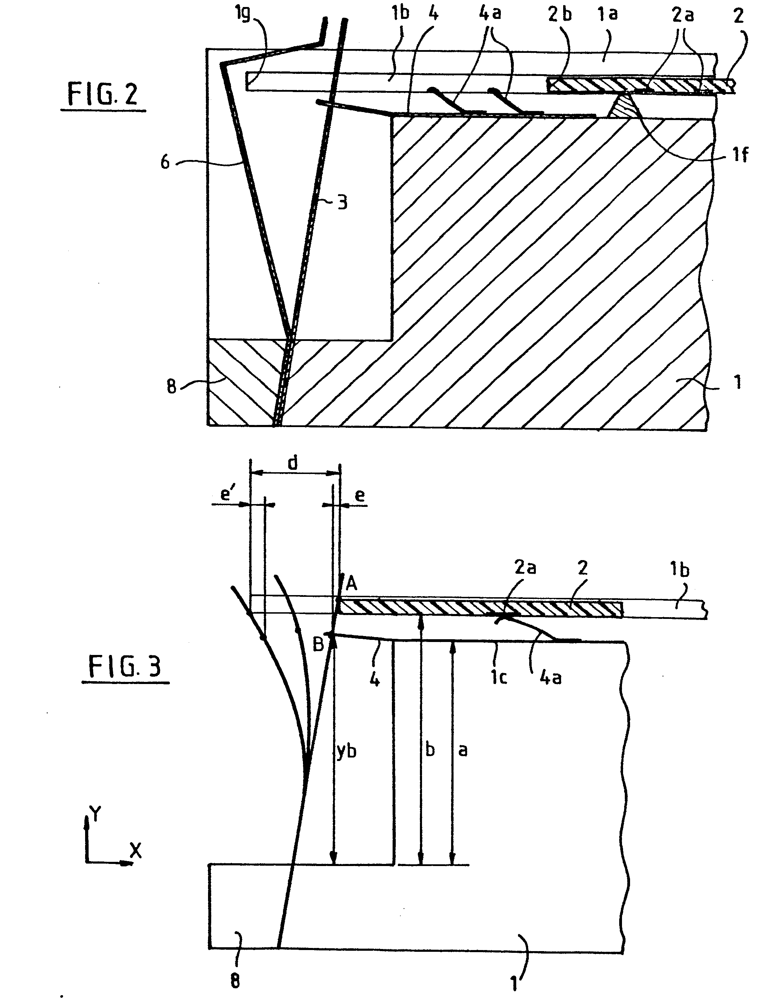

La figure 3 permet de comprendre comment un déplacement important de la carte 2 relativement au boîtier 1, par exemple de 5 mm, peut n'occasionner qu'un déplacement relatif, de l'ordre de quelques 1/10 mm, des contacts 4a sur les plots 2a, à partir du moment où la carte 2 est en contact avec la pièce 3. Si A est le point de contact de la carte avec la pièce flexible 3 et B le point de jonction entre les pièces 3 et 4, le déplacement relatif des contacts 4a sur les plots 2a est la différence des variations d'abscisse des points A et B, soit (e+e') au cours du déplacement d de la carte. On voit que cette grandeur est d'autant plus faible que les ordonnées de ces points sont proches, c'est-à-dire que la jonction B des pièces 3 et 4 est proche du point de contact A. On peut donc régler le glissement relatif des contacts 4a sur les plots 2a en agissant sur la géométrie du connecteur. Ce glissement, qui provoque un auto-nettoyage des contacts, vient donc s'ajouter aux autres dispositifs tendant à nettoyer, soit les contacts 4a, soit les plots 2a, à savoir :

    - le caoutchouc 1f qui vient frotter les plots 2a, et

    - le frottement des contacts 4a sur la carte 2 avant sa mise en position.

Par exemple, pour un connecteur aisément logeable dans des positions existantes, on prend une cote b égale à 15 mm, une cote a égale à 13,5 mm. Si la cote $y_b$ est prise égale à 14,5 mm, le déplacement relatif (e+e') pour un déplacement d de 5 mm est de 0,5 mm, donc parfaitement compatible avec la taille des plots de contact définis par la norme ISO/DIS 2894 (c'est-à-dire 2 mm). Ces différentes cotes sont en outre compatibles avec une réalisation des pièces 3 et 4 en circuit imprimé sur verre époxy de faible épaisseur (10 ou 15/100 mm). Les éléments de rappel 5 sont constitués de lames en cuivre au bérylium par exemple, de 5 mm de large et de 15/100 mm d'épaisseur. Ces éléments fléchissent au point de contact de la carte 2 de 0,9 mm sous l'effet de l'effort de frottement de 30 g et exercent, pour une flèche de 5 mm, une force de 160 g sur la carte, qui se décompose en deux composantes de valeur sensiblement équivalentes :

- l'une, dans le sens de la glissière 1b, qui tend à repousser la carte hors du connecteur, et qui doit être compensée par une force de frottement égale de la part du caoutchouc de nettoyage 1f et du frottement sur la glissière 1b (frottements statiques cette fois) ;

- l'autre, dans le sens perpendiculaire à la glissière 1b, qui tend à plaquer la carte contre le bord de la glissière 1f et donc à immobiliser la carte 2.

Dans cette réalisation, la partie fixe 3b de la pièce flexible 3 et les éléments de contacts 4a sont dans un même demi-espace par rapport au plan de la carte ; on peut, bien sûr, réaliser un dispositif où la partie fixe 3b de la pièce flexible 3 et les contacts 4a seraient de part et d'autre du plan de la carte, cette disposition ayant l'intérêt de réduire encore l'encombrement du système.

Par ailleurs, on peut utiliser la grande souplesse de la carte telle qu'elle est spécifiée dans la norme qui la définit, en dotant la glissière la d'un profil non rectiligne, de telle sorte que les plots 2a ne viennent au contact des contacts 4a que lorsque la carte commence à entraîner la pièce flexible 3 ; une telle disposition aurait pour effet de réduire ou d'annuler le frottement des contacts 4a sur d'autres parties de la carte que les plots 2a.

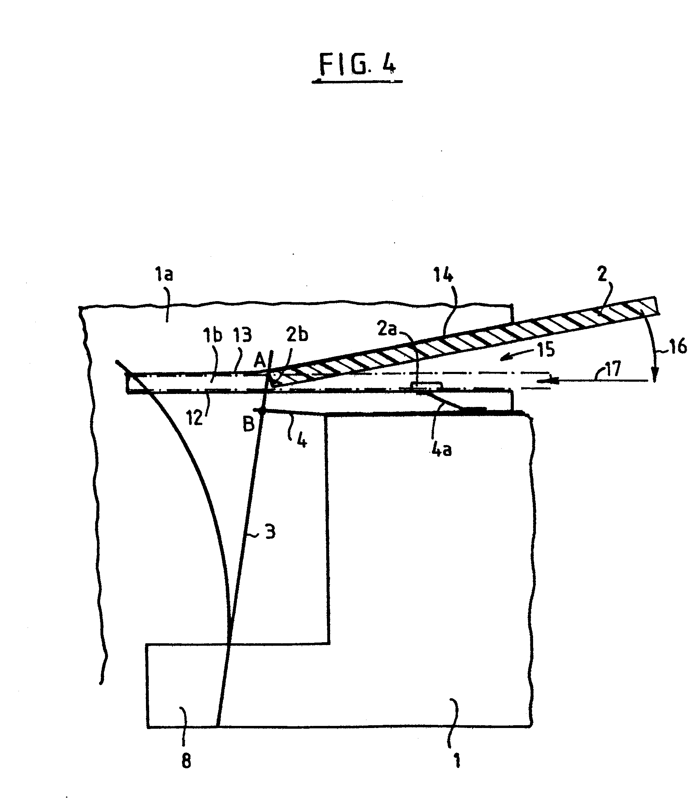

La figure 4 permet d'illustrer une telle disposition. Dans celle-ci, la glissière 1b comprend un bord inférieur rectiligne 12 et un bord supérieur comprenant, d'une part, dans sa partie antérieure, une portion rectiligne 13 parallèle au bord inférieur 12 et, d'autre part, dans sa partie postérieure, une portion oblique 14 raccordée à la partie rectiligne au niveau où s'étend la partie supérieure, formant butée, de la pièce flexible 3.

La glissière 1b présente donc une partie allant en s'évasant vers l'orifice d'introduction 15 de la carte 2, de sorte que celle-ci peut y être engagée obliquement conformément à la position représentée en traits pleins.

Dans cette position, la bordure antérieure 2b de la carte 2, vient buter contre la partie supérieure de la pièce flexible 3, ce qui assure son positionnement par rapport à la pièce porte-contacts 4.

Dans une phase suivante, on rabat la carte 2 contre le bord inférieur 12 de la glissière 1b (flèche 16) ce qui provoque l'application des éléments de contacts 4a sur les plots de contact 2a.

On engage ensuite la partie antérieure de la carte 2 dans la partie antérieure 12, 13 de la glissière 1b en appliquant à la carte 2 une pression antagoniste à celle des éléments de rappel 5 (flèche 17).

En fin de course, la carte 2 se trouve maintenue en position comme dans l'exemple précédent.

Il est clair que cette solution présente en outre l'avantage de faciliter considérablement l'introduction de la carte 2 et de limiter les risques de coincement qui pourraient se produire par suite de légères déformations de la carte et/ou par suite d'introduction de poussière.

Revendications de brevet

1. Connecteur pour objets portatifs incluant un circuit électrique ou électronique et qui présente une face de contact munie d'au moins un plot de contact (2a), au moins un élément de guidage et au moins un élément de butée (2b) situé à une distance prédéterminée dudit plot (2a), ce connecteur comprenant une structure fixe (1) comportant au moins un conducteur fixe destiné à être électriquement raccordé audit plot (2a), ainsi que des moyens de guidage (1b), dans lesquels lesdits éléments·de guidage de l'objet peuvent être engagés et coulisser selon au moins un axe de déplacement déterminé jusqu'à une position fin de course dans laquelle ladite face de contact se trouve dans un plan déterminé,
caractérisé en ce qu'il comprend en outre un dispositif de connexion comportant :

- une partie déformable élastiquement (3) montée fixement par l'une de ses extrémités sur une portion de la structure fixe (1) comprenant le susdit élément conducteur, cette partie déformable élastiquement étant agencée de manière à exercer à distance de ladite extrémité une force de rappel ;

- une partie (4) mobile en translation parallèlement au susdit plan et à faible distance de celui-ci, cette partie mobile (4) étant reliée à la partie déformable (3), à distance de ladite extrémité ;

- au moins un élément porte-contact (4a) muni d'un organe de contact glissant et relié à ladite partie mobile (4), cet élément porte-contact (4a) s'étendant légèrement en saillie par rapport audit plan ;

- un dispositif de butée solidaire de ladite partie déformable (3) et/ou de la partie mobile (4), en saillie dans l'intervalle compris entre le plan de la partie mobile (4) et ledit plan déterminé, ce dispositif de butée étant situé à une distance de l'organe de contact sensiblement égale à la distance entre l'élément de butée et ledit plot de contact (2a) de l'objet (2), et en un emplacement tel qu'il soit sollicité par l'élément de butée de l'objet lors de son coulissement dans les moyens de guidage ;

- au moins un élément conducteur (4b, 3b) solidaire dudit élément de contacts glissants (4a) de la partie mobile (4) et de la partie flexible (3) et assurant la continuité électrique entre ledit organe de contact (2a) et l'élément conducteur ; et

- un contact de validation apte à détecter la présence de l'objet dans une zone des éléments de guidage située en aval dudit dispositif de butée.

2. Connecteur selon la revendication 1, caractérisé en ce que la susdite pièce flexible (3) est associée à au moins un élément de rappel déformable élastiquement (5).

3. Connecteur selon l'une des revendications 1 et 2, caractérisé en ce que le contact de validation comprend un élément souple métallique sur lequel vient porter une plage de contact (3g) prévue sur la partie déformable élastiquement (3) du dispositif de connexion ou sur l'élément de rappel (5) qui lui est associé.

4. Connecteur selon l'une des revendications précédentes, caractérisé en ce qu'il comprend un élément (1f) destiné à assurer une friction de la surface de contact de l'objet (2) lors de son engagement dans les susdits éléments de guidage (1b).

5. Connecteur selon l'une des revendications précédentes,
caractérisé en ce que la susdite partie mobile (4) comprend
un support flexible comportant des métallisations (4b) sur
lesquelles sont soudés les éléments de contacts (4a).


6. Connecteur selon la revendication 5,
caractérisé en ce que la susdite partie mobile (4) consiste
en une plaquette de circuit imprimé de faible épaisseur qui
glisse sur une surface plane de la structure fixe (1).


7. Connecteur selon l'une des revendications précédentes,
caractérisé en ce que la susdite partie déformable élastiquement (3) consiste en une plaquette de circuit imprimé de
faible épaisseur comprenant des métallisations (3d) aptes à
connecter les éléments conducteurs (4b) de la partie mobile
(4) à des conducteurs fixes correspondants situés dans la
zone de fixation de ladite pièce flexible à la structure
fixe (1) du connecteur.


8. Connecteur selon l'une des revendications 6 et 7,
caractérisé en ce que la fixation de la partie mobile (4)
sur la partie déformable élastiquement (3) est réalisée par
soudure des métallisations (3d, 4b) correspondantes de ces
deux pièces.


9. Connecteur selon l'une des revendications 5 à 8,
caractérisé en ce que la plaquette de circuit imprimé constituant la partie déformable élastiquement (3) comprend une
fente (3c) dans laquelle vient s'engager une extrémité de la
plaquette de circuit imprimé constituant la susdite partie
mobile (4).


10. Connecteur selon l'une des revendications précédentes, destiné à assurer une connexion électrique entre une
carte électronique (2) et un système fixe de traitement,
caractérisé en ce que les susdits éléments de guidage consistent en les bords latéraux de la carte (2) et les moyens de guidage consistent en deux glissières (2b) dans lesquelles peuvent être introduites et coulisser lesdits bords latéraux de la carte (2).

11. Connecteur selon la revendication 10, caractérisé en ce que lesdites glissières (1b) présentent un profil rectiligne.

12. Connecteur selon la revendication 11, caractérisé en ce que lesdites glissières comprennent chacune un bord inférieur rectiligne (12) et un bord supérieur comprenant :

- d'une part, dans sa partie antérieure, une portion rectiligne (13) parallèle au bord inférieur (12), et

- d'autre part, dans sa partie postérieure, une portion oblique (14) raccordée à la partie rectiligne sensiblement au niveau où s'étend le susdit dispositif de butée du dispositif de connexion.

# FIG. 1

1 / 3

0190527

0190527

FIG. 2

FIG. 3

# FIG. 4

## RAPPORT DE RECHERCHE EUROPEENNE

EP 85 40 2554

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,D | FR-A-2 445 560 (CII-HB) <br> * Page 5; page 6, lignes 1-10; figures 1-3 * <br><br> ----- | 1,6 | H 01 R 23/68 <br> G 06 K 7/06 |

**DOMAINES TECHNIQUES RECHERCHES (Int. Cl.4)**

H 01 R
G 06 K

Le présent rapport de recherche a été établi pour toutes les revendications

| Lieu de la recherche <br> LA HAYE | Date d'achèvement de la recherche <br> 09-04-1986 | Examinateur <br> LOMMEL A. |
|---|---|---|